# EUROPEAN PATENT SPECIFICATION

(11) **EP 3 772 128 B1**
(45) Date of publication and mention of the grant of the patent: **23.03.2022**
(21) Application number: 20188114.1
(22) Date of filing: 28.07.2020
(51) Int. Cl.: H01M 10/052, H01M 10/44

(54) **FORMATION EQUIPMENT SYSTEM HAVING FIRE-SPREADING PREVENTION FUNCTION**
FORMATIONSAUSRÜSTUNGSSYSTEM MIT FEUERAUSBREITUNGSVERHINDERUNGSFUNKTION
SYSTÈME D'ÉQUIPEMENT DE FORMATION DOTÉ D'UNE FONCTION DE PRÉVENTION CONTRE LA PROPAGATION D'INCENDIE

(30) Priority: 01.08.2019 KR 20190093906
(43) Date of publication of application: 03.02.2021
(73) Proprietor: WONIK PNE CO., LTD., Suwon-si, Gyeonggi-do 16648 (KR)
(72) Inventor: CHUNG, Dae Taek, 13554 Seongnam-si, Gyeonggi-do (KR); KIM, Byung Hum, 18447 Hwaseong-si, Gyeonggi-do (KR); LEE, Jae Min, 14105 Anyang-si, Gyeonggi-do (KR)
(74) Representative: Schmid, Nils T.F.

(56) References cited:
- WO-A1-2012/015003
- JP-A- H11 219 732
- JP-A- 2003 190 312

## Description

### BACKGROUND

### 1. Field

The present disclosure relates to a formation equipment system having a fire-spreading prevention function, and more particularly, to a formation equipment system having a fire-spreading prevention function that prevents flame and smoke from spreading to an outside during a fire accident.

### 2. Description of Related Art

In general, secondary batteries capable of charging and discharging have been actively researched with development of portable electronic devices such as cellular phones, notebook computers, and computer camcorders.

In particular, such secondary batteries include nickel-cadmium batteries, lead acid batteries, nickel metal hydride batteries, lithium ion batteries, lithium polymer batteries, metal lithium secondary batteries, and air zinc batteries.

Typically, in manufacturing a lithium secondary battery, first, a mixture of an active material, a binder, and a plasticizer is applied to a positive electrode current collector and a negative electrode current collector to prepare a positive electrode plate and a negative electrode plate which in turn are disposed on both sides of a separator respectively to form a battery cell of a predetermined shape. Then, the battery cell is inserted into a battery case which is sealed to complete a battery pack.

The lithium secondary battery is not released immediately after assembly thereof. This is because even when the battery is assembled without defects through all the above steps, it may not be determined that the battery has no defects without testing of charging and discharging characteristic of the secondary battery.

In order to determine whether the battery is defective or to secure stability of battery performance, particularly, lifespan, two processes, that is, formation and aging must be performed before the release thereof.

The formation process refers to repetitions of recharging and discharging after the battery assembly to activate the battery.

A formation equipment system is used for the formation process. The formation equipment system has a structure in which a plurality of stages accommodating batteries are arranged adjacent to each other. In this connection, most of conventional formation equipment systems do not consider a fire that may occur during the charging process of the battery. That is, when a fire occurs in one stage due to a cause such as an explosion of the battery that may occur during the charging of the battery, a flame spreads to adjacent stages, thereby causing explosion in an entirety of the formation equipment system and spreading damage caused by the flame.

### [Prior Art Literature]

### [Patent Document]

Korean Patent No. 10-1780200

### SUMMARY

This Summary is provided to introduce a selection of concepts in a simplified form that are further described below in the Detailed Description. This Summary is not intended to identify all key features or essential features of the claimed subject matter, nor is it intended to be used alone as an aid in determining the scope of the claimed subject matter.

A purpose of the present disclosure is to provide a formation equipment system having a fire-spreading prevention function that prevents flame and smoke from spreading to an entirety of the equipment system when a fire occurs.

Purposes in accordance with the present disclosure are not limited to the above-mentioned purpose. Other purposes and advantages in accordance with the present disclosure as not mentioned above may be understood from following descriptions and more clearly understood from embodiments in accordance with the present disclosure. Further, it will be readily appreciated that the purposes and advantages in accordance with the present disclosure may be realized by features and combinations thereof as disclosed in the claims.

In one aspect of the present disclosure, a formation equipment system with a fire-spreading prevention function includes two or more stages arranged in an adjacent manner to each other, each stage accommodating therein a formation equipment for performing a formation process of a secondary battery; a fireproof shutter installed at a front face or a rear face of each stage; a sprinkler installed on an inner face of a ceiling of each stage; a drain tray installed on an inner face of a bottom of each stage, wherein the drain tray has a drain hole; and an exhaust hole for discharging smoke from each stage to an outside.

In one implementation, the system further comprises: a sensor to detect overheating or overcurrent of the formation equipment, or detect smoke or a temperature within each stage; and a controller configured to activate the fireproof shutter to screen the front face or the rear face of the stage when a value detected by the sensor is above or equal to a predetermined value.

In one implementation, the fireproof shutter includes: a frame member located on a side of the front face or the rear face, wherein a U-cross sectional shaped vertically-extending groove is defined in the frame member; a fireproof cloth rolling mechanism installed at a top of the front face or the rear face; a weight bar mounted at and extending horizontally along a bottom of a fireproof cloth of the fireproof cloth rolling mechanism; first and second fixing shafts disposed at a top of the front face or the rear face to respectively support both ends of the weight bar to fix the weight bar in a fixed position; and a solenoid valve configured to displace the first and second fixing shafts to allow a vertical downward movement of the weight bar.

In one implementation, when the value detected by the sensor is above or equal to the predetermined value, the controller is configured to cut off power to the solenoid valve to displace the first and second fixing shafts to allow a vertical downward movement of the weight bar.

In one implementation, the sprinkler includes a glass bulb type sprinkler.

In one implementation, the system further comprises a drain pipe connecting to the drain tray of each stage.

In one implementation, the system further comprise an exhaust duct connecting to the exhaust hole of each stage.

In one implementation, the frame member has an extension that allows a volume of an inlet of the U-cross sectional shaped vertically-extending groove to be larger, wherein the inlet faces away the weight bar at the fixed position.

In one implementation, the solenoid valves of the stages are electrically connected to each other in series.

Effects in accordance with the present disclosure may be as follows but may not be limited thereto.

According to the formation equipment system with the fire-spreading prevention function according to the present disclosure, in the event of the fire, the interior of the stage is immediately sealed from the outside to prevent the flame and smoke generated inside the stage from being discharged to the outside, thereby preventing the spread of the fire flame from one stage to adjacent stages thereto.

Further, according to the formation equipment system with the fire-spreading prevention function according to the present disclosure, the spread of the fire may be further prevented by quickly extinguishing the flame. Further, indoor environmental pollution due to the smoke caused by the fire may be inhibited.

Further, according to the formation equipment system with the fire-spreading prevention function according to the present disclosure, an effect of preventing contamination of adjacent stages due to the fire extinguishing water scattered during the sprinkler operation may be realized.

Moreover, the effect of the present disclosure is not limited to the above effects. It should be understood to include all possible effects derived from descriptions of the present disclosure or a configuration as set forth in the claims.

### BRIEF DESCRIPTION OF DRAWINGS

FIG. 1 shows an appearance of a formation equipment system with a fire-spreading prevention function according to one embodiment of the present disclosure.
FIG. 2 is an enlarged perspective view showing one stage shown in FIG. 1.
FIG. 3 is a diagram for illustrating a configuration of a fireproof shutter shown in FIG. **1**.
FIG. 4 is a partially enlarged perspective view showing a portion of FIG. 3.
FIG. 5 is a partial enlarged view showing a portion of FIG. 3.
FIG. 6 is a perspective view showing a connection structure of a drain tray and a drain pipe shown in FIG. **1****.**

### DETAILED DESCRIPTIONS

For simplicity and clarity of illustration, elements in the figures, are not necessarily drawn to scale. The same reference numbers in different figures, denote the same or similar elements, and as such perform similar functionality. Also, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

Examples of various embodiments are illustrated and described further below. It will be understood that the description herein is not intended to limit the claims to the specific embodiments described.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further understood that the terms "comprises", "comprising", "includes", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of the associated listed items. Expression such as "at least one of' when preceding a list of elements may modify the entire list of elements and may not modify the individual elements of the list.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

In addition, it will also be understood that when a first element or layer is referred to as being present "on" a second element or layer, the first element may be disposed directly on the second element or may be disposed indirectly on the second element with a third element or layer being disposed between the first and second elements or layers. It will be understood that when an element or layer is referred to as being "connected to", or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

Further, as used herein, when a layer, film, region, plate, or the like is disposed "on" or "on a top" of another layer, film, region, plate, or the like, the former may directly contact the latter or still another layer, film, region, plate, or the like may be disposed between the former and the latter. As used herein, when a layer, film, region, plate, or the like is directly disposed "on" or "on a top" of another layer, film, region, plate, or the like, the former directly contacts the latter and still another layer, film, region, plate, or the like is not disposed between the former and the latter. Further, as used herein, when a layer, film, region, plate, or the like is disposed "below" or "under" another layer, film, region, plate, or the like, the former may directly contact the latter or still another layer, film, region, plate, or the like may be disposed between the former and the latter. As used herein, when a layer, film, region, plate, or the like is directly disposed "below" or "under" another layer, film, region, plate, or the like, the former directly contacts the latter and still another layer, film, region, plate, or the like is not disposed between the former and the latter.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

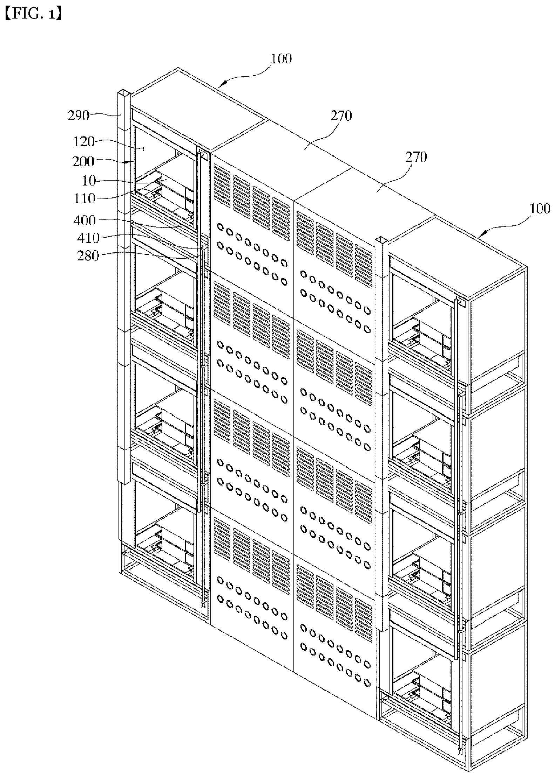

FIG. 1 shows an appearance of a formation equipment system with a fire-spreading prevention function according to one embodiment of the present disclosure.

The formation equipment system having the fire-spreading prevention function according to one embodiment of the present disclosure includes two or more stages (100) arranged adjacent to each other as shown in FIG. 1**.** For example, each stage (100) may have a rectangular parallelepiped shape having an inner space defined therein. A bottom face of the rectangular parallelepiped shape may be open, but a tray support (110) for supporting a tray (10) on which a battery cell is mounted may be disposed in the open bottom face. Each of a front face and a rear face of the rectangular parallelepiped shape may have a tray communication opening (120) through which the tray (10) enters and exits the inner space.

Further, each stage (100) includes a fireproof shutter (200) installed in at least one of the front face and the rear face of the stage (100), a sprinkler (300) installed on a ceiling of the stage (100), and a drain tray 400a having a drain hole (410) defined therein and installed on a bottom of the stage (100), and an exhaust hole (500) to discharge smoke from the stage (100).

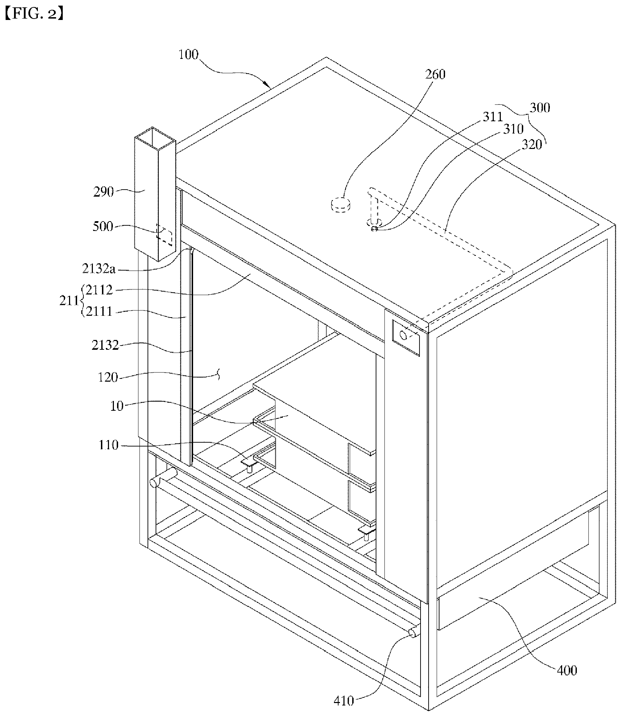

FIG. 2 is an enlarged perspective view showing one stage shown in FIG. 1**.** The fireproof shutter (200), the sprinkler (300), the drain tray (400) and the exhaust hole (500) are shown in a clear manner in FIG. 2**.** For example, the fireproof shutter (200) may be installed on each of the front face and rear face of each stage (100). In this connection, the fireproof shutter (200) may be installed at a top of the tray communication opening (120) of each of the front face and rear face.

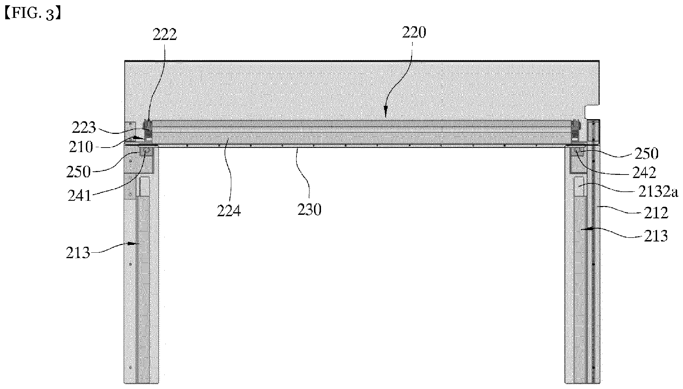

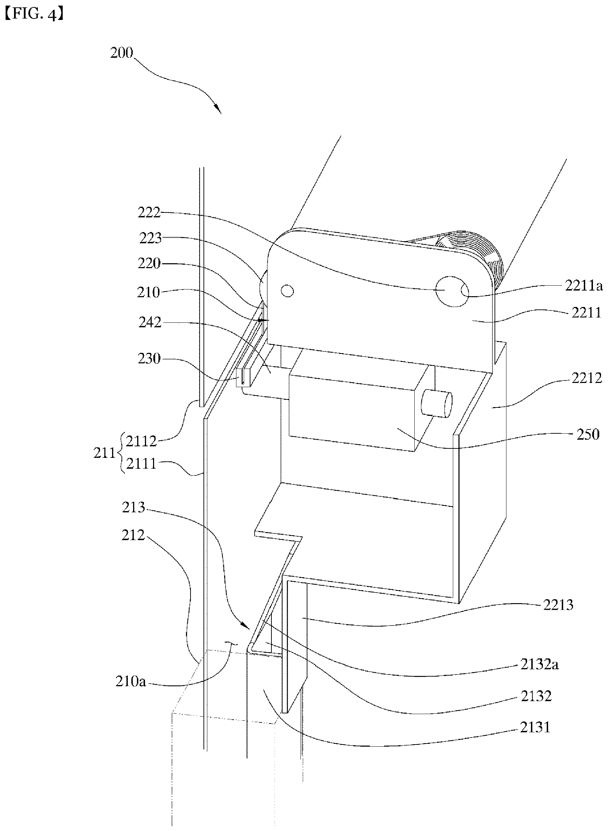

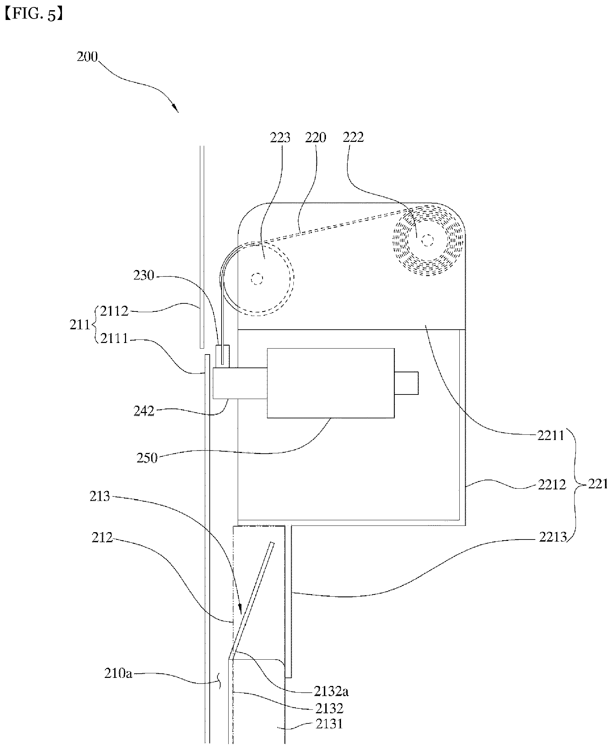

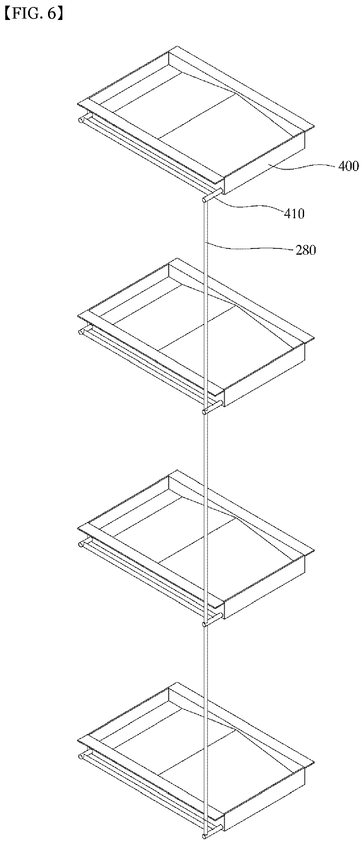

FIG. 3 is a diagram for illustrating a configuration of the fireproof shutter shown in FIG. 1**.** FIG. 4 is a partially enlarged perspective view showing a portion of FIG. 3. FIG. 5 is a partial enlarged view showing a portion of FIG. 3. FIG. 6 is a perspective view showing a connection structure of a drain tray and a drain pipe shown in FIG. 1**.**

Referring to FIG. 3 to FIG. 5, the fireproof shutter (200) includes a frame member (210), a fireproof cloth rolling mechanism (220), a weight bar (230), first and second fixing shafts (241 and 242) and a solenoid valve (250).

The frame member (210) may extend along both sides of each of the front face and rear face of the stage (100), that is, along left and right sides of each of the front face and rear face thereof. The frame member (210) has a U-cross sectional shaped vertically-extending groove (₂₁₀a). In an example, the frame member (210) may include a front frame (211), a pair of rectangular cross-sectional frames (212), and a pair of opposite frames (213).

The front frame (211) may include a pair of first plates (2111) parallel to left and right sides of the tray communication opening (120) respectively and fixed to the left and right sides of the tray communication opening (120), respectively, and a second plate (2112) which is connected to and disposed between the pair of first plates (2111) and fixed to a top of the tray communication opening (120).

Each rectangular cross-sectional frame (212) may have a rectangular cross-sectional shape. Each of the pair of rectangular cross-sectional frames (212) may have a length corresponding to a total length of each first plate (2111) and a partial height of the second plate (2112) and may be parallel to a longitudinal direction of each of the first plates (2111) and fixed to a rear face of each of the first plate (2111) and a rear face of the second plate (2112).

The pair of opposite frames (213) are coupled to the pair of rectangular cross-sectional frames (212) respectively. For example, each of the pair of opposite frames (213) has a portion bent in an L-shape and thus may have a first face (2131) and a second face (2132) perpendicular to each other. In this case, the pair of opposite frames (213) may be coupled to the pair of rectangular cross-sectional frames (212) respectively such that an L-shaped portion thereof contacts one outer side face of each rectangular cross-sectional frame (212). In this connection, a face of the L shaped portion fixed to each rectangular cross-sectional frame (212) may be the first face (2131), and a face of the L shaped portion facing away each of the pair of the first plates (2111) of the front frame (211) may be the second face (2132). The second face (2132) is spaced, by a distance, from each of the pair of the first plates (2111).

As described with reference to the structure of the frame member (210), the first plate (2111) of the front frame (211) has a right angle with the rectangular cross-sectional frame (212) which has a right angle with the second face (2132) of the opposite frame (213). The second face (2132) is spaced, by a predetermined distance, from the first plate (2111) of the front frame (211). Thu, the frame member (210) has a U-cross sectional shaped vertically-extending groove (210a) defined by the first plate (2111) of the front frame (211), the rectangular cross-sectional frame (212), and the second face (2132) of the opposite frame (213). The U-cross sectional shaped vertically-extending groove (210a) is formed at each of the left and right sides of the tray communication opening (120) of the stage (100).

In one example, a top in a longitudinal direction of the U-cross sectional shaped vertically-extending groove (210a) of the frame member (210), that is, a top opening of the U-cross sectional shaped vertically-extending groove (210a) may extend widely. For example, the second face (2132) of the opposite frame (213) facing away the first plate (2111) of the front frame (211) may include an extension (2132a) extending inclinedly in a direction away from the front frame (211). Thus, the top opening of the U-cross sectional shaped vertically-extending groove (210a) may be extended by the extension (2132a).

The fireproof cloth rolling mechanism (220) may be installed at the top of the tray communication opening (120) of the stage (100). For example, the fireproof cloth rolling mechanism (220) may include a pair of roller support frames (221), a winding roller (222), a guide roller (223) and a fireproof cloth (224).

Each of the roller support frames (221) may include a roller support plate (2211), a valve-receiving portion (2212), and a fixed portion (2213).

The roller support plate (2211) may be in a form of a plate, and may extend in a perpendicular manner to a plane of the front frame (211). A roller receiving hole (2211a) for receiving an end of the winding roller (222) may be formed in one side far from the front frame (211).

The valve-receiving portion (2212) may be formed integrally with the roller supporting plate (2211), and may be disposed under the roller supporting plate (2211). The valve-receiving portion (2212) maybe formed in a box shape in which three side faces facing toward the front frame (211), the roller support plate (2211), and the rectangular cross-sectional frame (212) are open.

The fixed portion (2213) may extend downward from a bottom face of the valve-receiving portion (2212). The fixed portion (2213) may be fixed to one side face of the rectangular cross-sectional frame (212) opposite to another side face thereof facing away the front frame (211) and perpendicular to another side face thereof to which the first face (2131) of the opposite frame (213) is fixed.

The winding roller (222) winds the fireproof cloth (224) in a roll form. For example, the winding roller (222) may be rotatably coupled, at each of both ends thereof, to each of the roller receiving holes (2211a) formed in the roller support plates (2211) of the pair of the roller support frames (221) and may be located inwardly of the front frame (211) of the frame member (210). The winding roller (222) may freely rotate.

The guide roller (223) guides a distal end of the fireproof cloth (224) into the U-cross sectional shaped vertically-extending groove (₂₁₀a). To this end, the guide roller (223) may be rotatably coupled, at both ends thereof, to the roller support plates (2211) of the pair of the roller support frames (221) and is disposed in front of the winding roller (222). The guide roller (223) may freely rotate.

The fireproof cloth (224) is wound, in a form of a roll, around the winding roller (222). The fireproof cloth (224) may be unrolled from the winding roller (222) in a space in rear of the front frame (211) to seal the tray communication opening (120) of the stage (100).

The weight bar (230) of the fireproof cloth rolling mechanism (220) may allow the fireproof cloth (224) to be unrolled downwardly from the winding roller (222) via gravity. To this end, the weight bar (230) is mounted at and extends along a bottom of the fireproof cloth (224). That is, the weight bar (230) is mounted at the bottom of the fireproof cloth (224) so that the fireproof cloth (224) may be unrolled from the winding roller (222) downwardly. The weight bar (230) may be located above the U-cross sectional shaped vertically-extending groove (210a) defined in the frame member (210). When the weight bar (230) unrolls downwardly using a self-weight, the bar (230) may enter the U-cross sectional shaped vertically-extending groove (210a) and falls down along the longitudinal direction of the U-cross sectional shaped vertically-extending groove (210a).

The first and second fixing shafts (241 and 242) are disposed at both sides of a top of the tray communication opening (120) of the stage (100) respectively and fix the weight bar (230) at a fixed position or allow a movable state of the weight bar (230). For example, the first and second fixing shafts (241 and 242) are accommodated in the box shape of the valve-receiving portion (2212) of the roller support frame (221) and are placed beneath the weight bar (230) mounted at the bottom of the fireproof cloth (224) rolled around the winding roller to support the bar (230). In this connection, the fixed position means a position where a weight based drop of the weight bar (230) is blocked.

A pair of solenoid valves (250) are connected to the first and second fixing shafts (241) and (242), respectively, so that the first and second fixing shafts (241 and 242) may move back and forth. For example, each of the solenoid valve (250) may be accommodated in the box shape of the valve-receiving portion (2212) of the roller support frame (221) and may be connected to one end of each of the first and second fixing shafts (241 and 242). When the system is powered on, the pair of the solenoid valves (250) may displace the first and second fixing shafts (241 and 242) to a first position to disallow the weight based drop of the weight bar (230). When the system is powered off, the pair of the solenoid valves (250) may displace the first and second fixing shafts (241 and 242) to a second position to allow the weight based drop of the weight bar (230). The first position is a front position and the second position is a rear position.

In one example, the solenoid valve (250) of each stage (100) may be individually driven and may be connected to the controller (270). Alternatively, the solenoid valves (250) of the stages (100) may be connected to each other in series. In this case, under control of the controller (270), the solenoid valve (250) of each stage (100) moves to the second position, so that the fireproof shutter (200) of each stage (100) may operate.

The sprinkler (300) is installed on an inner face of the ceiling of each stage (100). In the event of the fire in each stage (100), the sprinkler (300) may inject water into each stage (100). The sprinkler (300) may be embodied as a glass bulb type sprinkler having a glass bulb that stores liquid such as alcohol that expands due to heat. The bulb is destroyed when the liquid expands due to heat. For example, the sprinkler (300) may include a head (310) including a glass bulb (311) and a water supply pipe (320) storing water therein.

The drain tray (400) is configured to receive and drain the water sprayed from the sprinkler (300) outside each stage (100). The drain tray (400) is installed on an inner face of the bottom of each stage (100). The drain hole (410) may be formed in one side thereof. The drain hole (410) may be exposed to the outside of each stage (100).

The exhaust duct (290) is connected to each stage (100). In the event of the fire in each stage, the exhaust duct (290) may exhaust smoke out of each stage (100). For example, the exhaust duct (290) may be disposed at one side of the tray communication opening (120) of the stage (100) and may be in fluid communication with the interior of each stage (100) at one side of the front frame (211) of the frame member (210) of the fireproof shutter (200). This exhaust duct (290) may extend along the height direction of each stage (100). The exhaust ducts (290) of the stages (100) may communicate with each other. Further, although not shown, a top of the exhaust duct (290) may extend into a space out of each stage (100).

In one example, the formation equipment system having the fire-spreading prevention function according to one embodiment of the present disclosure may further include a sensor (260) and a controller (270).

The sensor (260) may be configured to detect overheating or overcurrent of the formation equipment, or smoke or temperature within each stage (100). For example, the sensor (260) may measures the temperature in the stage (100) and may be installed on the ceiling of the stage (100).

The controller (270) may drive the fireproof shutter (200) based on a value input from the sensor (260). To this end, the controller (270) may store therein a predetermined value for driving the fireproof shutter (200). The predetermined value may be compared with the value input from the sensor (260). In one example, when the controller (270) detects that the value from the sensor (260) is above the predetermined value, the controller (270) may activate the fireproof shutter (200). In this connection, the fireproof shutter (200) may be driven when the first and second fixing shafts (241 and 242) move to the second position by the controller (270) cutting off the power to the solenoid valve (250). For example, the controller (270) may be configured to cut off only the power to be supplied to each stage (100) or cut off the power of the entire system. When the power of the entire system is cut off, the fireproof shutter (200) placed in each stage (100) may be operated. For example, the controller (270) may be embodied as a separate device external to the stage (100), or may be placed next to the stage (100).

In one example, the formation equipment system having the fire-spreading prevention function according to one embodiment of the present disclosure may include a drain pipe (280) and the exhaust duct (290).

The drain pipe (280) is connected to the drain tray (400) of each stage (100) as shown in FIG. 6. For example, the drain pipe (280) may be connected to the drain hole (410) formed in one side of the drain tray (400). In this connection, the drain pipe (280) may extend along the height direction of each stage (100) and may be connected to the drain hole (410) of each stage (100). Accordingly, water may be discharged from the drain tray (400) disposed at each stage (100).

Hereinafter, a process of operating the fireproof shutter (200) in the formation equipment system having the fire-spreading prevention function according to one embodiment of the present disclosure will be described.

The tray (10) having a battery cell loaded thereon is seated on a tray support (110) and accommodated in each stage (100). Power is supplied to each stage (100), and a formation process is performed in which the cell is inspected while repeating charging and discharging of the cell within each stage (100).

In the formation process, the sensor (260) may measure the temperature in each stage (100). During the formation process, overheating or overcurrent of equipment may occur. For example, when the interior of stage (100) is overheated, the sensor (260) measures the temperature in the stage (100) and inputs the measured temperature to the controller (270).

When the value input from the sensor (260) is greater than or equal to a predetermined value stored in the controller (270), the controller (270) drives the fireproof shutter (200). That is, the controller (270) cuts the power to the first and second solenoid valves (250). For example, the controller (270) may cut off the power input to the first and second solenoid valves (250) of the fireproof shutter (200) installed at the stage (100) in an event of the overheating.

When the power to the first and second solenoid valves (250) is cut off, the first and second solenoid valves (250) may displace the first and second fixing shafts (241 and 242) connected thereto to the second position, that is, the rear position, respectively.

When the first and second fixing shafts (241 and 242) are displaced to the rear position, the weight bar (230) maintained at the fixed position by the first and second fixing shafts (24 and 242) may be brought into the movable state. Thus, the weight bar (230) drops via its own weight.

In this connection, the weight bar (230) may pass through the U-cross sectional shaped vertically-extending groove (210a) which is defined by the extension (2132a) of the second face (2132) of the frame member (210) of the fireproof cloth rolling mechanism (220) of the frame member (210). Then, the weight bar (230) falls down along the U-cross sectional shaped vertically-extending groove (₂₁₀a). Each of both ends of the weight bar (230) is received in the U-cross sectional shaped vertically-extending groove (210a).

Further, when the weight bar (230) falls down, the fireproof cloth (224) wound around the winding roller (222) is unrolled from the winding roller (222) downwards together with the descending of the weight bar (230). While each of both sides of the unrolled fireproof cloth (224) is located in the U-cross sectional shaped vertically-extending groove (210a), the fireproof cloth (224) screens the tray communication opening (120) of the stage (100) to seal the interior of the stage (100) from the outside.

The above process may be performed before the sensor (260) detects the overheating and explosion of the battery cell in the stage (100) causes a fire in the stage (100). Alternatively, the above process may proceed in a situation in which a fire occurs in the stage (100) after the detection of the overheating.

When a fire occurs in the stage (100), the temperature in the stage (100) rises and the liquid in the glass bulb (311) of the head (310) of the sprinkler (300) placed on the ceiling of the stage (100) gradually expands to destroy the glass bulb (311). As the glass bulb (311) is destroyed, water stored in the water supply pipe (320) of the sprinkler (300) is sprayed through the head (310) into the interior of the stage (100), thereby extinguishing the fire.

The water injected into the interior of the stage (100) is collected into the drain tray (400) placed on the bottom of the stage (100). After the fire suppression, the water collected into the drain tray (400) may be discharged through the drain pipe (280) connected to the drain tray (400).

In addition, the smoke generated during the fire event in the stage (100) may be discharged to the outside of the stage (100) through the exhaust duct (290).

When using the formation equipment system having the fire-spreading prevention function according to one embodiment of the present disclosure, the inside of the stage (100) is immediately sealed from the outside when the fire in the stage (100) occurs due to the temperature rise of the stage resulting from the heat emission from the cell during the formation process or due to the overheating or overcurrent of the formation equipment. Thus, the flame and the smoke generated in the stage (100) may be prevented from spreading into the outside, thereby preventing the spread of the fire where the flame from one stage (100) is transferred to adjacent stages (100).

Further, the fire is extinguished using the sprinkler (300) as soon as the fire occurs. Thus, there is an advantage in that the flame may be quickly extinguished and the spread of the fire may be prevented.

Further, in the event of the fire in the stage (100), the interior of the stage (100) is sealed and the smoke from the fire may be exhausted to the outside through the exhaust duct (290), thereby preventing indoor environmental pollution as caused by the smoke from the fire.

## Claims

1. A formation equipment system with a fire-spreading prevention function, the system being **characterized in that** the system comprises:
two or more stages (100) arranged in an adjacent manner to each other, each stage accommodating therein a formation equipment for performing a formation process of a secondary battery;
a fireproof shutter (200) installed at a front face or a rear face of each stage;
a sprinkler (300) installed on an inner face of a ceiling of each stage;
a drain tray (400) installed on an inner face of a bottom of each stage, wherein the drain tray (400) has a drain hole (410); and
an exhaust hole 500 for discharging smoke from each stage to an outside.

2. The system of claim 1, wherein the system further comprises:
a sensor (260) to detect overheating or overcurrent of the formation equipment, or detect smoke or a temperature within each stage; and
a controller (270) configured to activate the fireproof shutter to screen the front face or the rear face of the stage when a value detected by the sensor is above or equal to a predetermined value.

3. The system of any of claims 1-2, wherein the fireproof shutter (200) includes:
a frame member (210) located on a side of the front face or the rear face, wherein a U-cross sectional shaped vertically-extending groove (210a) is defined in the frame member (210);
a fireproof cloth rolling mechanism (220) installed at a top of the front face or the rear face;
a weight bar (230) mounted at and extending horizontally along a bottom of a fireproof cloth of the fireproof cloth rolling mechanism;
first and second fixing shafts (241 and 242) disposed at a top of the front face or the rear face to respectively support both ends of the weight bar to fix the weight bar in a fixed position; and
a solenoid valve (250) configured to displace the first and second fixing shafts to allow a vertical downward movement of the weight bar.

4. The system of any of claims 1-3, wherein when the value detected by the sensor (260) is above or equal to the predetermined value, the controller (270) is configured to cut off power to the solenoid valve to displace the first and second fixing shafts to allow a vertical downward movement of the weight bar.

5. The system of any of claims 1-4, wherein the sprinkler (300) includes a glass bulb type sprinkler.

6. The system of any of claims 1-5, wherein the system further comprises a drain pipe (280) connecting to the drain tray (400) of each stage.

7. The system of any of claims 1-6, wherein the system further comprise an exhaust duct connecting to the exhaust hole (500) of each stage.

8. The system of claim 3-7, wherein the frame member (210) has an extension (2132a) that allows a volume of an inlet of the U-cross sectional shaped vertically-extending groove (210a) to be larger, wherein the inlet faces away the weight bar (230) at the fixed position.

9. The system of claim 3-8, wherein the solenoid valves (250) of the stages are electrically connected to each other in series.

## Patentansprüche

1. Formationseinrichtungssystem mit Feuerausbreitungsbegrenzungsfunktion, **dadurch gekennzeichnet, dass** das System umfasst:
zwei oder mehr nebeneinander angeordnete Stufen (100), wobei jede Stufe eine Formationseinrichtung zur Durchführung eines Formationsprozesses einer Sekundärbatterie aufnimmt;
jeweils einen an einer Vorderseite oder an einer Rückseite jeder Stufe montierten feuerfesten Verschluss (200);
jeweils einen innenseitig an einer Decke jeder Stufe montierten Sprenkler (300);
jeweils eine innenseitig am Boden jeder Stufe montierte Auffangwanne (400), wobei die Auffangwanne (400) jeweils eine Abflussöffnung (410) aufweist; und
jeweils eine Auslassöffnung (500) zum Ableiten von Rauch aus jeder Stufe nach außen.

2. System nach Anspruch 1, wobei das System ferner umfasst:
einen Sensor (260) innerhalb jeder Stufe zum Erfassen einer Überhitzung oder eines Überstroms der Formationseinrichtung, oder zum Erfassen von Rauch oder einer Temperatur; und
eine Steuerung (270) die dazu eingerichtet ist, den feuerfesten Verschluss zu aktivieren, um die Vorderseite oder die Rückseite der Stufe abzuschirmen, wenn ein vom Sensor erfasster Wert einen vorbestimmten Wert erreicht oder überschreitet.

3. System nach einem der Ansprüche 1 oder 2, wobei der feuerfeste Verschluss jeweils umfasst:
ein an einer Seite der Vorderseite oder der Rückseite angeordnetes Rahmenteil (210), wobei eine im Querschnitt U-förmige, vertikal verlaufende Nut (210a) in dem Rahmenteil (210) ausgebildet ist;
einen an einer Oberseite der Vorderseite oder der Rückseite montierten Rollmechanismus (220) für ein feuerfestes Tuch;
eine an einer Unterseite eines feuerfesten Tuchs des Rollmechanismus befestigte und sich horizontal entlang der Unterseite erstreckende Gewichtsstange (230);
eine erste und eine zweite Befestigungswelle (241 und 242), die an der Oberseite der Vorderseite oder der Rückseite angeordnet sind, um jeweils beide Enden der Gewichtsstange zu tragen und die Gewichtsstange in einer befestigten Position zu fixieren; und
ein Magnetventil (250) das dazu eingerichtet ist, die erste und die zweite Befestigungswelle zu verschieben, um eine Abwärtsbewegung der Gewichtsstange zu ermöglichen.

4. System nach einem der Ansprüche 1 bis 3, wobei die Steuerung (270) dazu eingerichtet ist die Stromzufuhr zum Magnetventil zu unterbrechen, wenn der vom Sensor (260) erfasste Wert einen vorbestimmten Wert erreicht oder überschreitet, um die erste und die zweite Befestigungswelle zu verschieben und eine Abwärtsbewegung der Gewichtsstange zu ermöglichen.

5. System nach einem der Ansprüche 1 bis 4, wobei der Sprenkler (300) einen Glaskolbensprenkler umfasst.

6. System nach einem der Ansprüche 1 bis 5, wobei das System ferner ein Abflussrohr (280) umfasst, das mit der Auffangwanne (400) jeder Stufe verbunden ist.

7. System nach einem der Ansprüche 1 bis 6, wobei das System ferner eine Abluftleitung umfasst, die mit der Auslassöffnung (500) jeder Stufe verbunden ist.

8. System nach einem der Ansprüche 3 bis 7, wobei das Rahmenteil (210) eine Verlängerung (2132a) aufweist, die es ermöglicht, ein Volumen eines Einlasses der im Querschnitt U-förmigen, vertikal verlaufenden Nut (210a) zu vergrößern, wobei der Einlass in der befestigten Position von der Gewichtsstange (230) weg weist.

9. System nach einem der Ansprüche 3 bis 8, wobei die Magnetventile (250) der Stufen elektrisch in Reihe geschaltet sind.

## Revendications

1. Système d'équipement de formation avec une fonction de prévention de propagation du feu, le système étant **caractérisé en ce que** le système comprend:
deux ou plusieurs étages (100) disposés de manière adjacente les uns aux autres, chaque étage renfermant à l'intérieur un équipement de formation pour effectuer un processus de formation d'une batterie secondaire;
un volet réfractaire (200) installé en face avant ou en face arrière de chaque étage;
un sprinkler (300) installé sur une face interne d'un plafond de chaque étage;
un bac de drainage (400) installé sur une face interne d'un fond de chaque étage, dans lequel le bac de drainage (400) possède un orifice de drainage (410); et
un orifice d'échappement (500) pour évacuer la fumée de chaque étage vers un extérieur.

2. Système selon la revendication 1, dans lequel le système comprend en outre:
un capteur (260) pour détecter une surchauffe ou une surintensité de l'équipement de formation, ou détecter de la fumée ou une température à l'intérieur de chaque étage; et
un régulateur (270) configuré pour activer le volet réfractaire pour masquer la face avant ou la face arrière de la scène lorsqu'une valeur détectée par le capteur est supérieure ou égale à une valeur prédéterminée.

3. Système selon une quelconque des revendications 1-2, dans lequel le volet réfractaire (200) comprend:
un élément de châssis (210) situé sur un côté de la face avant ou de la face arrière, dans lequel une rainure s'étendant verticalement en forme de section transversale en U (210a) est définie dans l'élément de châssis (210);
un mécanisme d'enroulement de tissu réfractaire (220) installé au sommet de la face avant ou de la face arrière;
un fléau de balance (230) montée sur et s'étendant horizontalement le long d'un fond d'un tissu réfractaire du mécanisme d'enroulement de tissu réfractaire;
un premier et un deuxième arbres de fixation (241 et 242) disposés au sommet de la face avant ou de la face arrière pour supporter respectivement les deux extrémités du fléau de balance pour fixer le fléau de balance dans une position fixe; et
une électrovanne (250) configurée pour déplacer les premier et deuxième axes de fixation afin de permettre un mouvement vertical descendant du fléau de balance.

4. Système selon une quelconque des revendications 1-3, dans lequel lorsque la valeur détectée par le capteur (260) est supérieure ou égale à la valeur prédéterminée, le régulateur (270) est configuré pour couper l'alimentation de l'électrovanne pour déplacer le premier et le deuxième axes de fixation pour permettre un mouvement vertical descendant du fléau de balance.

5. Système selon une quelconque des revendications 1-4, dans lequel le sprinkler (300) comprend un sprinkler de type ampoule de verre.

6. Système selon une quelconque des revendications 1-5, dans lequel le système comprend en outre un tuyau de vidange (280) se raccordant au bac de drainage (400) de chaque étage.

7. Système selon une quelconque des revendications 1-6, dans lequel le système comprend en outre un conduit d'échappement se raccordant à l'orifice d'échappement (500) de chaque étage.

8. Système selon les revendications 3-7, dans lequel l'élément de cadre (210) possède une extension (2132a) qui permet à un volume d'une entrée de la rainure en forme de section en U (210a) s'étendant verticalement d'être plus grand, dans lequel l'entrée se détourne la barre de poids (230) à la position fixe.

9. Système selon la revendication 3-8, dans lequel les électrovannes (250) des étages sont connectées électriquement les unes aux autres en série.
